## Europäisches Patentamt

## European Patent Office

## Office européen des brevets

(19)

(11) Veröffentlichungsnummer: **0 053 296**
**B1**

(12) **EUROPÄISCHE PATENTSCHRIFT**

(45) Veröffentlichungstag der Patentschrift:
**01.08.84**

(21) Anmeldenummer: **81109350.9**

(22) Anmeldetag: **30.10.81**

(51) Int. Cl.³: **C 04 B 19/04,** C 03 C 11/00,
C 04 B 21/00, C 04 B 25/00

(54) **Verfahren zur Herstellung von Schaumkörpern aus Wasserglas.**

(30) Priorität: **02.12.80 DE 3045404**

(43) Veröffentlichungstag der Anmeldung:
**09.06.82 Patentblatt 82/23**

(45) Bekanntmachung des Hinweises auf die Patenterteilung:
**01.08.84 Patentblatt 84/31**

(84) Benannte Vertragsstaaten:
**AT BE CH DE FR GB IT LI LU NL SE**

(56) Entgegenhaltungen:
DE - A - 1 905 340
DE - A - 2 165 912
GB - A - 1 299 014
GB - A - 1 362 614
US - A - 3 661 602
US - A - 4 153 591

(73) Patentinhaber: **Henkel Kommanditgesellschaft auf Aktien, Postfach 1100 Henkelstrasse 67, D-4000 Düsseldorf-Holthausen (DE)**

(84) Benannte Vertragsstaaten: **DE**

(73) Patentinhaber: **Kupfer, Manfred, Meyerholz 2, D-2833 Dünsen (DE)**

(84) Benannte Vertragsstaaten: **AT BE CH DE FR GB IT LI LU NL SE**

(72) Erfinder: **Beer, Günter, Mühlenstrasse 27, D-4100 Duisburg 17 (DE)**
Erfinder: **Pesch, Wolfgang, Noithausener Strasse 10, D-4048 Grevenbroich (DE)**
Erfinder: **Friedemann, Wolfgang, Dr., Stephanusstrasse 14, D-4040 Neuss (DE)**
Erfinder: **Kupfer, Manfred, Meyerholz 1, D-2833 Dünsen (DE)**

## Beschreibung

Die Erfindung betrifft ein Verfahren zur Herstellung von Schaumkörpern aus einer Alkalimetallsilikatlösung (Wasserglas), anorganischen Füllstoff, Netzmittel und Härter enthaltenen Mischung, die mechanisch verschäumt, in die Form des Körpers gebracht und so ausgehärtet wird.

Die Herstellung von Formkörpern aus Wasserglasschaum ist bekannt (DE-OS 1 905 340, DE-OS 2 157 371). Das Aufschäumen erfolgt entweder durch chemische Treibmittel oder durch Einblasen bzw. Einrühren von Gasen wie Luft oder Dampf. Im vorliegenden Zusammenhang ist jedoch nur das mechanische Verschäumen insbesondere durch Einrühren von Luft von Interesse.

Solche auf der Basis von Wasserglasschaum aufgebauten Formkörper eignen sich in erster Linie zum Einsatz als Dämmstoff, und zwar sowohl zur Wärme- als auch zur Schalldämmung im Bauwesen. Von besonderer Bedeutung sind dabei Feuchtigkeitsbeständigkeit als auch hohe Flammfestigkeit.

Die bekannten Verfahren zur Herstellung von Formkörpern auf der Basis von Wasserglasschaum führten jedoch nicht zu befriedigenden Produkten. Das aus der DE-OS 1 905 340 bekannte Verfahren ist sehr energieaufwendig und führt zu Schaumstoffen mit inhomogener Porenverteilung und entsprechend inhomogener Wärmeleitfähigkeit. Die nach der DE-OS 2 157 371 hergestellten Schaumkörper sind vor allem nicht ausreichend feuchtigkeitsbeständig. Bei Anwendung der bekannten Verfahren ergaben sich sowohl Schwierigkeiten beim Vertfahrensablauf als auch der Verarbeitung der fertigen Erzeugnisse. Der Erfindung liegt daher die Aufgabe zugrunde, ein Verfahren anzugeben, mit welchem sich unter geringem verfahrenstechnischen Aufwand mit hoher Sicherheit vor allem als Dämmstoff verwendbare Formkörper auf der Grundlage von Wasserglasschaum herstellen lassen, die masshaltig, in üblicher Weise transportierbar und ohne aussergewöhnliche Vorkehrungen verarbeitbar sind.

Diese Aufgabe wird erfindungsgemäss dadurch gelöst, dass der eingangs beschriebenen Mischung eine Naturlatex-Dispersion zugesetzt und mit ihr verschäumt wird, ehe in bekannter Weise die Aushärtung des geformten Schaumes erfolgt. Es hat sich gezeigt, dass der Einbau einer Naturlatex-Dispersion in den Wasserglasschaum die Eigenschaften der daraus hergestellten Formkörper sowohl während ihrer Bildung (also bis zum Aushärten) als auch der fertigen Produkte entscheidend verbessert: Es ergeben sich Formkörper von gleichmässiger Konsistenz mit homogener Porenverteilung, hoher Masshaltigkeit sowie ausreichender mechanischer Festigkeit, ohne dass die Flammfestigkeit wesentlich beeinträchtigt wird. Von besonderer Bedeutung ist die erhöhte Feuchtbeständigkeit der erfindungsgemässen Schaumkörper. Ferner ist die Stabilität des Schaumes während des Härtungsvorgangs wesentlich besser und die Neigung zum Schrumpfen und Verwerfen der fertigen Schaumkörper beim Trocknen und Lagern geringer.

Es ist zwar aus der DE-OS 1 905 340 bekannt, auf der Grundlage von Wasserglasschaum hergestellte Formkörper mit einer Beschichtung aus einer ammoniakstabilisierten Gummimilch zu versehen, um die mangelnde Feuchtigkeitsbeständigkeit des Wasserglasschaumes zu verbessern. Eine Beschichtung ist jedoch nicht geeignet, dem Formkörper wirklich eine ausreichende Feuchtigkeitsbeständigkeit zu verleihen, zumal schon während des Transports und auch während der Verarbeitung im Zuge des Einsatzes der Formkörper mit Beschädigungen der Beschichtung gerechnet werden muss. Umso überraschender ist es, dass sich das Problem der Feuchtigkeitsbeständigkeit von Wasserglasschäumen durch unmittelbares Einbauen des Latex in das aus Wasserglas sowie im übrigen Füllstoff, Netzmittel und Härter enthaltende Schaumgerüst erzielen lässt, ohne ins Gewicht fallende Nachteile auf anderen Gebieten in Kauf nehmen zu müssen.

Von besonderer Bedeutung ist dabei, dass der Latex-Zusatz in Form einer Naturlatex-Dispersion erfolgt. Vorzugsweise wird eine 50%ige Naturlatex-Dispersion in einer Menge von 0,2 bis 30 Gew.-%, vorzugsweise 0,2 bis 10 Gew.-% bezogen auf die Gesamtmischung eingesetzt. Je nach Art und Anteil der übrigen Mischungsbestandteile wird die individuelle Auswahl des Latex-Anteils unter Berücksichtigung der Tatsache erfolgen, dass mit abnehmendem Zusatz die Flammbeständigkeit, mit zunehmendem Zusatz die Feuchtebeständigkeit wächst.

Als Füllstoffe für die Formkörper kommen insbesondere spezifisch leichte anorganische Verbindungen in Frage beispielsweise das unter der Bezeichnung «Perligran» bekannte Aluminiumsilikat-Pulver oder Blähtone (Magnesium-Aluminium-Silikat - «Vermiculit»). Es eignen sich auch gemahlenes Stückenglas (festes Alkalimetallsilikat), Glasmehl, Glaskugeln, Kieselsäure, Tonerde sowie färbende Pigmente, wie Titandioxid, Eisenoxide, Chromoxide oder Ultramarin. Ferner kommen als Füllstoffe gegebenenfalls auch spezifisch schwerere anorganische Verbindungen — beispielsweise Kreide, Quarzmehl, Aluminiumhydroxid, Tonerde-Schmelzzement — in Betracht, die dann natürlich nur in geringeren Mengen eingesetzt werden dürfen. Die obere Grenze des spezifischen Gewichts der Füllstoffe ergibt sich aus der mechanischen Belastbarkeit des Schaumes während der Bildung der Formkörper. Sie wird ausserdem durch die Verarbeitbarkeit der Mischung in den üblicherweise zum Verschäumen eingesetzten Mixern begrenzt. Hiernach ist es vorteilhaft, die Füllstoffe in einer Korngrösse bis 0,1 mm und in einer Menge bis 50 Gew.-%, vorzugsweise 10 bis 20 Gew.-%, zuzumischen.

Generell können auch Füllstoff-Gemische für die erfindungsgemässen Schaumkörper Verwendung finden. Gegebenenfalls lassen sich auch faserförmige Füllstoffe, beispielsweise Glasfasern, Mineralwolle oder Asbest, in den Schaum einarbeiten.

Vorzugsweise wird ferner als Härter 1 bis 10 Gew.-%, vorzugsweise 2 bis 6 Gew.-% Glycerintriacetat beim Verschäumen zudosiert. Anstelle dieses Härters kommen als Härter generell alle diejenigen organischen und anorganischen Verbindungen in Frage, die üblicherweise zum Härten von Wasserglas eingesetzt werden, beispielsweise andere säureabspaltende Ester oder anorganische Härter wie amorphe Kreide, Erdalkalimetalloxide (Magnesiumoxid) oder Natriumsilicofluorid. Natürlich können auch Härter-Gemische eingesetzt werden.

Grundsätzlich können im Rahmen des vorliegenden Verfahrens alle gängigen Wasserglastypen eingesetzt werden. Bevorzugt werden jedoch solche Arten, die nicht hochalkalisch sind, sondern einen höheren Silikatanteil haben. So ist insbesondere vorgesehen, dass die Alkalimetallsilikatlösung im Falle von Natrikumsilikat einen Feststoffgehalt von etwa 27 bis 23 Gew.-% bei einem Siliziumdioxid/Natriumoxid-Molverhältnis von 4 : 1 bis 3 : 1 und im Falle von Kaliumsilikat einen Feststoffgehalt von etwa 20 bis 36 Gew.-% bei einem Siliziumdioxid/Kaliumoxid-Molverhältnis von etwa 4 : 1 bis 3,4 : 1 hat, wobei beliebige Mischungsverhältnisse der genannten Alkalimetallsilikate Verwendung finden können.

Zur weiteren Verbesserung der Feuchtebeständigkeit des Schaumkörpers können auch boratmodifizierte Wassergläser verwendet werden. Die Alkalisilikatlösung hat dann vorzugsweise einen Zusatz von 0,1 bis 2,5 Gew.-%, insbesondere 1 bis 2 Gew.-% $B_2O_3$.

Die eingesetzten Netzmittel (Schaumbildner) sollten in jedem Falle alkalibeständig sein. Es bieten sich dafür alkalibeständige anionische und/oder nichtionische Tenside an. Vorzugsweise wird das anionische Tensid Na-$C_{14}$-$C_{16}$-Alkylsulfonat eingesetzt, und zwar vorteilhaft in einer Menge von 0,1 bis 10 Gew.-%, insbesondere 4 bis 6 Gew.-%, einer 30%igen wässrigen Lösung.

*Beispiele*

1. 86,8 GT  Natriumsilikatlsg.
     (26,9% $SiO_2$ / 8,0% $Na_2O$)
     Mol.-Verh. 3,46
     (Feststoffgehalt: 34,9 Gew.-%)
 2,0 GT  Schaumbildner
 0,2 GT  Naturlatex
 9,0 GT  Perligran-Pulver
 2,0 GT  Glycerintriacetat
Schaumgewicht 0,2 - 0,3 kg/l

2. 70,5 GT  Natriumsilikatlsg.
     (26,9% $SiO_2$ / 8,0% $Na_2O$)
     Mol.-Verh. 3,46
     (Feststoffgehalt: 34,9 Gew.-%)
 3,5 GT  Schaumbildner
 6,0 GT  Perligran-Pulver
 6,0 GT  Glashohlkugeln
10,0 GT  Naturlatex
 4,0 GT  Glycerintriacetat
Schaumgewicht 0,2 - 0,3 kg/l

3. 51,1 GT  Natriumsilikatlsg.
     (26,9% $SiO_2$ / 8,0% $Na_2O$)
     Mol.-Verh. 3,46
     (Feststoffgehalt: 34,9 Gew.-%)
 3,8 GT  Wasser
 3,8 GT  Schaumbildner
25,0 GT  Naturlatex

 6,0 GT  Perligran-Pulver
 7,5 GT  Glashohlkugeln
 0,8 GT  Pigmente
 2,0 GT  Glycerintriacetat
Schaumgewicht 0,4 - 0,5 kg/l

4. 66,7 GT  Kaliumsilikatlsg.
     (23,7% $SiO_2$ / 10,7% $K_2O$)
     Mol.-Verh. 3,46
     (Feststoffgehalt: 34,4 Gew.-%)
 6,7 GT  Wasser
 9,2 GT  Glashohlkugeln
 9,2 GT  Perligran-Pulver
 0,3 GT  Naturlatex
 4,6 GT  Schaumbildner
 3,3 GT  Glycerintriacetat
Schaumgewicht 0,2 - 0,3 kg/l

5. 54,7 GT  Kaliumsilikatlsg.
     (23,7% $SiO_2$ / 10,7% $K_2O$)
     Mol.-Verh. 3,46
     (Feststoffgehalt: 34,4 Gew.-%)
 7,1 GT  Wasser
10,2 GT  Glashohlkugeln
 9,1 GT  Perligran-Pulver
 4,9 GT  Schaumbildner
 0,2 GT  Naturlatex
 4,0 GT  Glycerintriacetat
10,0 GT  Naturlatex
Schaumgewicht 0,3 - 0,4 kg/l

6. 51,7 GT  Kaliumsilikatlsg.
     (23,7% $SiO_2$ / 10,7% $K_2O$)
     Mol.-Verh. 3,46
     (Feststoffgehalt: 34,4 Gew.-%)
 5,1 GT  Wasser
 5,2 GT  Glashohlkugeln
 8,6 GT  Perligran-Pulver
 0,5 GT  Pigmente
20,0 GT  Naturlatex
 4,5 GT  Schaumbildner
 4,4 GT  Glycerintriacetat
Schaumgewicht 0,4 - 0,5 kg/l

7. 70,0 GT  Alkalisilikatlsg.
     (26,1% $SiO_2$ / 6,0% $Na_2O$/2,7% $K_2O$)
     Mol.-Verh. 3,46
     (Feststoffgehalt: 34,8 Gew.-%)
 7,0 GT  Wasser
 9,4 GT  Glashohlkugeln
 6,2 GT  Perligran-Pulver
 0,2 GT  Naturlatex
 4,0 GT  Schaumbildner
 3,2 GT  Glycerintriacetat
Schaumgewicht 0,2 - 0,3 kg/l.

In allen Fällen erfolgte die Verschäumung im Laborversuch diskontinuierlich oder mit einem mechanischen Luftverschäumer («Hansa-Mixer») kontinuierlich.

*a) Laborversuch*

Das Wasserglas wird mit den Füllstoffen homogen gemischt, der Schaumbildner (Netzmittel) dazugegeben und mit einem Laborschneebesen (Marke Starmix) ca. 4 Minuten bei Stellung II intensiv geschlagen. Nach anschliessender Härterzugabe (Glycerintriacetat), wird nochmals ca. 30 Sekunden gerührt und die Schaummasse zum Aushärten in Kunststoffformen gegossen.

*b) «Hansa-Mixer»*

Beim «Hansa-Mixer» wird die Wasserglas-Füllstoff-Schaumbildner-Mischung mit einer genau zu dosierenden Luftmenge angereichert, und anschliessend unter Anwendung hoher Scherkräfte zu Schaum geschlagen. Kurz vor Austritt aus der Schaummaschine wird der Härter zudosiert, der sehr homogen und feinverteilt untergerührt wird.

Der Vorteil gegenüber der Labormethode liegt darin, dass durch genaue Luftdosierung und -vermischung sehr homogene Schäume mit gleichmässigen Porenstrukturen kont. hergestellt werden können.

Die Trocknung erfolgte je nach der Dicke der aus dem Schaum geformten Platten 4 - 8 Tage bei Raumtemperatur oder 4 - 16 Stunden bei ca. 110°C im Umluft-Trockenschrank. In beiden Fällen trat eine leichte Schrumpfung ein, teilweise auch eine — jedoch stets geringe — Verformung.

Die Schaumkörper waren auch nach einer 48-stündigen Wasserlagerung formstabil, was ihre Feuchtigkeitsbeständigkeit ausweist.

## Patentansprüche

1. Verfahren zur Herstellung von Schaumkörpern aus einer Alkalimetallsilikatlösung (Wasserglas), anorganischen Füllstoff, Netzmittel und Härter enthaltenden Mischung, die mechanisch verschäumt, in die Form des Körpers gebracht und so ausgehärtet wird, dadurch gekennzeichnet, dass der Mischung eine Naturlatex-Dispersion zugesetzt und mit ihr verschäumt wird.

2. Verfahren nach Anspruch 1, dadurch gekennzeichnet, dass eine 50%ige Naturlatex-Dispersion in einer Menge von 0,2 bis 30 Gew.-%, vorzugsweise 0,2 bis 10 Gew.-%, bezogen auf die Gesamtmischung eingesetzt wird.

3. Verfahren nach Anspruch 1 oder 2, dadurch gekennzeichnet, dass die Alkalimetallsilikatlösung im Falle von Natriumsilikat einen Feststoffgehalt von etwa 27 bis 43 Gew.-% bei einem Siliziumdioxid/Natriumoxid-Molverhältnis von etwa 4 : 1 bis 3 : 1 und im Falle von Kaliumsilikat einen Feststoffgehalt von etwa 20 bis 36 Gew.-% bei einem Siliziumdioxid/Kaliumoxid-Molverhältnis von etwa 4 : 1 bis 3,4 : 1 hat, wobei beliebige Mischungsverhältnisse der genannten Alkalimetallsilikate Verwendung finden können.

4. Verfahren nach Anspruch 1, 2 oder 3, dadurch gekennzeichnet, dass eine boratmodifizierte Alkalisilikatlösung mit einem Zusatz von 0,1 bis 2,5 Gew.-% insbesondere 1 bis 2 Gew.-% $B_2O_3$ eingesetzt wird.

5. Verfahren nach einem der vorhergehenden Ansprüche, dadurch gekennzeichnet, dass als Netzmittel ein anionisches Tensid, vorzugsweise Na-$C_{14}$-$C_{16}$-Alkylsulfonat, in einer Menge von 0,1 bis 10 Gew.-%, insbesondere 4 bis 6 Gew.-%, einer 30%igen wässrigen Lösung verwendet wird.

6. Verfahren nach einem der vorhergehenden Ansprüche, dadurch gekennzeichnet, dass als Füllstoffe spezifisch leichte anorganische Verbindungen in einer Korngrösse bis 0,1 mm und in einer Menge bis 50 Gew.-%, vorzugsweise 10 bis 20 Gew.-%, zugemischt werden.

7. Verfahren nach einem der vorhergehenden Ansprüche, dadurch gekennzeichnet, dass als Härter 1 bis 10 Gew.-%, vorzugsweise 2 bis 6 Gew.-% Glycerintriacetat beim Verschäumen zudosiert werden.

## Claims

1. A process for the production of foam bodies from a mixture containing alkali metal silicate solution (waterglass), inorganic filler, wetting agent and hardener which is mechanically foamed, fashioned into the shape of the body and thus hardened, characterized in that a natural latex dispersion is introduced into and foamed with the mixture.

2. A process as claimed in claim 1, characterized in that a 50% natural latex dispersion is used in a quantity of from 0.2 to 30% by weight and preferably in a quantity of from 0.2 to 10% by weight, based on the mixture as a whole.

3. A process as claimed in claim 1 or 2, characterized in that, in the case of sodium silicate, the alkali metal silicate solution has a solids content of from about 27 to 43% by weight for a molar ratio of silicon dioxide to sodium oxide of from about 4 : 1 to 3 : 1 and, in the case of potassium silicate, a solids content of from about 20 to 36% by weight for a molar ratio of silicon dioxide to potassium oxide of from about 4 : 1 to 3.4 : 1, the alkali silicates mentioned being useable in any mixing ratios.

4. A process as claimed in claim 1, 2 or 3, characterized in that a borate-modified alkali silicate solution with an addition of from 0.1 to 2.5% weight and, more particularly, from 1 to 2% by weight of $B_2O_3$ is used.

5. A process as claimed in any of the preceding claims, characterized in that an anionic surfactant, preferably Na-$C_{14}$-$C_{16}$-alkyl sulfonate, is used as the wetting agent in a quantity of from 0.1 to 10% by weight and, more particularly, in a quantity of from 4 to 6% by weight of a 30% aqueous solution.

6. A process as claimed in any of the preceding claims, characterized in that inorganic compounds of low specific gravity having a particle size of up to 0.1 mm are added as the fillers in a quantity of up to 50% by weight and preferably in a quantity of from 10 to 20% by weight.

7. A process as claimed in any of the preceding claims, characterized in that from 1 to 10% by weight and preferably from 2 to 6% by weight of glycerol triacetate is added as hardener during foaming.

## Revendications

1. Procédé de fabrication de corps mousse à partir d'une solution de silicate de métal alkcalin (verre soluble), d'une charge minérale, d'un mélange contenant un mouillant et un durcissant, que l'on fait mousser mécaniquement, que l'on introduit dans le moule du corps et que l'on durcit ainsi à fond, caractérisé en ce qu'on ajoute au mélange une dispersion de latex naturel et effectue avec elle le moussage.

2. Procédé selon la revendication 1, caractérisé en ce qu'on ajoute une dispersion de latex naturel à 50% en une quantité de 0,2 à 30% en poids, de préférence de 0,2 à 10% en poids par rapport au mélange total.

3. Procédé selon la revendication 1 ou 2, caractérisé en ce que la solution de silicate de métal alcalin, dans le cas du silicate de sodium, a une teneur en matière sèche d'environ 27 à 43% en poids pour un rapport molaire dioxyde de silicium/oxyde de sodium d'environ 4 : 1 à 3 : 1, et dans le cas du silicate de potassium une teneur en matière sèche d'environ 20 à 36% en poids pour rapport molaire dioxyde de silicium/oxyde de potassium d'environ 4 : 1 à 3,4 : 1, en pouvant employer des rapports de mélange quelconques des silicates de métaux alcalins.

4. Procédé selon la revendication 1, 2 ou 3, caractérisé en ce qu'on utilise une solution de silicate alcalin modifiée au borate, avec une addition de 0,1 à 2,5% en poids, en particulier de 1 à 2% en poids de $B_2O_3$.

5. Procédé selon l'une des revendications précédentes, caractérisé en ce qu'on utilise comme mouillant un tensioactif anionique, de préférence un alcoylsulfonate de Na en $C_{14}$-$C_{16}$, en une quantité de 0,1 à 10% en poids, en particulier de 4 à 6% en poids, d'une solution aqueuse à 30%.

6. Procédé selon l'une des revendications précédentes, caractérisé en ce qu'on adjoint comme matières de charge des composés minéraux spécifiquement légers ayant une granulométrie allant jusqu'à 0,1 mm, en une quantité allant jusqu'à 50% en poids, de préférence de 10 à 20% en poids.

7. Procédé selon l'une des revendications précédentes, caractérisé en ce qu'on ajoute comme durcissant 1 à 10% en poids, de préférence 2 à 6% en poids de triacétate de glycérine au cours du moussage.